# EUROPEAN PATENT APPLICATION

(11) **EP 4 733 686 A1**
(43) Date of publication of application: **29.04.2026**
(21) Application number: 24208932.4
(22) Date of filing: 25.10.2024
(51) Int. Cl.: F24H 1/20, B01D 1/28, F24H 9/20

(54) **MECHANICAL VAPOUR RECOMPRESSION (MVR) HEATING SYSTEM**

(71) Applicant: Aquafair AB, 193 33 Sigtuna (SE)
(72) Inventor: CARLMAN, Fredrik, 193 33 Sigtuna (SE); ÅHRSTRÖM, Bert-Olof, 891 43 Örnsköldsvik (SE)
(74) Representative: Bjerkén Hynell KB

(57) **Abstract**

A mechanical vapour recompression (MVR) heating system (2) comprising a closed container (4) intended to contain working liquid (6), e.g. water, and vapour (7), the container (4) is provided with a working liquid inlet (8) arranged to receive an inflow (12) of low temperature working liquid into the container (4) and being connectable to a first pipe system (14) a, and a working liquid outlet (16) and/or a vapour outlet (50) arranged to provide an outflow (20) of high temperature working liquid/vapour out from the container (4). The MVR heating system (2) further comprises a compressor unit (24) arranged to receive vapour (7) from the container (4) via a vapour output member (26), and to generate a high pressure vapour flow (28), wherein the container (4) is provided with a vapour input member (30) configured to receive and expel said high pressure vapour flow (28) into the container (4). The heating operation performed by the system comprises:
-filling the container (4) with low temperature working liquid;
- heating the working liquid (6) of the container (4) until the working liquid temperature reaches a predetermined temperature;
- starting and running the compressor unit (24) resulting in that the pressure in the container (4) will decrease resulting in that the pre-heated working liquid starts to boil and produces vapour;
- generating said high pressure vapour flow (28);
- expelling said high pressure vapour (28) flow into said container (4), and
- supplying high temperature working liquid /vapour to external consumers, e.g. for heating purposes.

## Description

### Technical field

The present invention relates to a Mechanical Vapour Recompression (MVR) heating system, specifically to an MVR heating system designed for heating a working liquid, e.g. water. The system utilizes vapour recompression technology to efficiently heat the working liquid by utilizing energy from evaporated working liquid. This type of system can be used in various applications, such as industrial processes, district heating, and other energy recovery systems, where working liquid heating or working liquid vapour generation are required.

### Background

Mechanical Vapour Recompression (MVR) systems are commonly employed in processes requiring the reuse of latent heat supplied by the evaporation of liquids, such as water. In conventional systems, a substantial amount of energy is required to heat water, which can result in high operational costs and inefficient use of energy. The need exists for an improved system that can optimize the heating process, minimize energy consumption, and operate efficiently under various conditions.

The invention described herein addresses these needs by providing an MVR heating system that offers a more efficient way to heat a working liquid, e.g. water, while maximizing the heat recovery from working liquid vapour condensation.

Mechanical vapour recompression (MVR) or mechanical vapour compression (MVC) are two similar methods applying pressure/volume work to working liquid vapour, in order to increase its enthalpy thereby superheating the steam. The rationale behind is that heating already formed vapour through compression costs comparatively little energy comparing to generating new pristine vapour. And, the compression energy needed to compress vapour is relatively small compared with increase of thermal energy in the vapour. In order to successfully enable the recuperation of the evaporation heat, which constitutes the majority of the heat into the system, a positive and significant temperature difference between the superheated steam and the recipient medium, driving the re-flux of energy in the reverse direction, is needed to become established. This is the main reason for steam (re)compression.

A conventional MVR-unit usually comprises an evaporator, where the evaporation of a working medium takes place, a condenser, where the condensation takes place, a compressor that compresses the steam from the evaporator to a superheated state, a heating unit for initiating the evaporation process in the evaporator, and a control system that monitors and controls the process.

Below some patent documents within the technical field of MVR will be identified and briefly discussed.

In the EP2716341 a system and a method is described for liquid treatment by mechanical vapour recompression comprising a fixed fluid-tight evaporator housing with improved characteristics regarding the heat exchange between heated vapour-containing volume and recompressed heating vapour-containing volume.

WO2022/089827 describes a process water distillation plant comprising a control device arranged to control the supply of energy from an energy source into the process water distillation plant depending on the progress of the distillation process in the process water distillation plant.

In EP3689449 a system for energy recycling using mechanical vapour recompression in combined chemical process is described.

WO2022/243287 describes a robust mechanical vapour recompression arrangement comprising a compound turbine system.

In HE W F et al: "Performance analysis of the mechanical vapour compression desalination system driven by an organic Rankine cycle", ENERGY, ELSEVIEW, AMSTERDAM, NL, vol. 141, 5 October 2017, pages 1177-1186, EP085312089, ISSN: 03660-5442, DOI: 10.1016/J.ENERG/.2017.10.014 is disclosed use of MVR technology. In WO97/40327 is disclosed a compression absorption heat pump.

And in EP4411279, that relates to an energy system comprising an MVR unit for using thermal energy generated by the MVR unit.

The above mentioned documents describe systems and methods where mechanical vapour recompression are used. However, by applying their detailed knowledge of MVR, the inventors have identified and realized further improvements, particularly related to simplified structural implementations, and thus more cost-effective solutions applying the MVR technology. Thus, the object of the present invention is to achieve an improved MVR heating system where the improvement comprises a simplified structural system that includes fewer structural components in comparison to conventionally used MVR systems.

### Summary

The general object of the present invention is to use the heat generating capabilities that the processes Mechanical Vapour Recompression (MVR) and Mechanical Vapour Compression (MVC) utilize and possess. These said, already known, processes utilize the fact that compression of a working liquid vapour, e.g. water vapour (steam), leads to an increase in temperature of the compressed vapour. In energy terminology; the increase of thermal energy, of the vapour, exceeds the energy needed to induce the necessary pressure/volume work of the said vapour. In other words; the coefficient of performance (COP) or ratio between heat generation to energy insertion, of the vapour/compression work, exceeds unity. As discussed above, this has already been used today as a way to treat water in an evaporation-vapour compression-condensation loop, e.g. in desalination, whereby the heated steam leads water to boil and evaporate.

The above object is achieved by the MVR heating system according to the independent claim.

Preferred embodiments are set forward by the dependent claims.

The present invention is directed to an MVR heating system that incorporates a closed container designed to contain a working liquid, e.g. water, and vapour, and comprising a lower part and an upper part. The container is configured to receive an inflow of low-temperature working liquid via at least one working liquid inlet and to discharge high-temperature working liquid, or vapour, via at least one working liquid/vapour outlet. A compressor unit is arranged to receive vapour from the container and generate a high-pressure vapour flow that is expelled into the low-temperature working liquid in the container.

The MVR heating system includes a working liquid heating member in the container for heating the working liquid during the system's start-up procedure and a control unit that regulates the system's operation. The control unit manages the filling of the container, heating the working liquid to a predetermined temperature, and running the compressor unit to initiate vapour generation and recompression. Once high-pressure vapour is generated, it is expelled into the colder working liquid, transferring heat and condensing as it rises through the container.

The MVR heating system defined herein has a considerably simplified structure in comparison to known systems. As an example, no separate pipes are required for the vapour within the container, instead the vapour is directly expelled into the container. That in turn provides for an efficient heat transfer through condensation of high-pressure vapour bubbles in colder working liquid.

There are no limitations regarding the external system that can utilize thermal energy generated by the MVR heating system, and expelled as hot working liquid and/or vapour. Any systems where thermal energy from a liquid or gas carrier is of interest, can be connected to the MVR heating system. For example, thermal energy can be used in district heating, for heating of buildings and houses, as energy storage, for industrial processes or similar, but also in airborne heating systems via an liquid to air heat exchanger. Still further applications may be considered, e.g. using the hot working liquid/vapour in desalination and dewatering/concentration applications (e.g. for making tomato juice, etc.).

A further advantage of the MVR heating system according to present invention is that the energy system may be located at the desired location for utilization of thermal energy generated. The MVR heating system may be arranged as a mobile system.

### Brief description of the drawings

Figure 1 is a schematic illustration of the MVR heating system according to embodiments of the invention.
Figure 2 is a schematic illustration of the MVR heating system according to other embodiments of the invention.
Figure 3 is a schematic illustration of the MVR heating system according to further embodiments of the invention.
Figure 4 is a schematic illustration of the MVR heating system according to still other embodiments of the invention.

### Detailed description

The MVR heating system will now be described in detail with references to the appended figures. Throughout the figures the same, or similar, items have the same reference signs. Moreover, the items and the figures are not necessarily to scale, emphasis instead being placed upon illustrating the principles of the invention.

In the figures, the arrows illustrate the flow direction in the respective line.

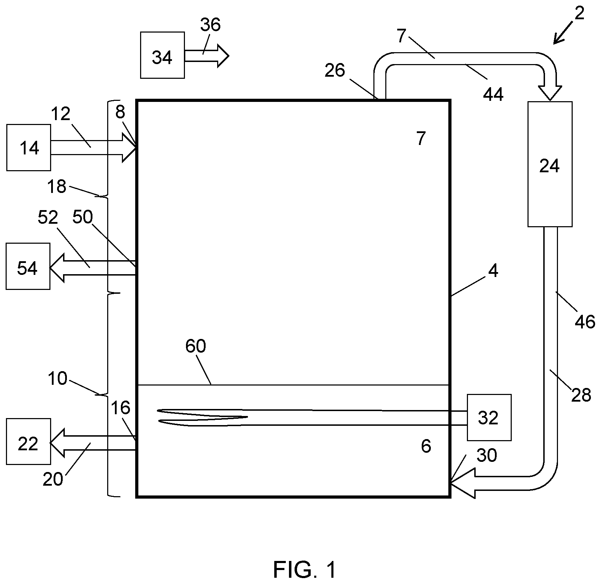

First with references to the schematic illustration shown in figure 1. The present invention relates to an MVR heating system 2 comprising a closed container 4 with a lower part 10 and an upper part 18. The container is designed to hold a working liquid 6 and vapour 7. The system includes at least one working liquid inlet 8 for low-temperature working liquid inflow 12 received from a first pipe system 8 provided with controllable pumps and valves, and at least one working liquid outlet 16 for high-temperature working liquid outflow 20 and/or a vapour outlet 50 for high-temperature vapour outflow 52. These outlets connect to external pipe systems, a second pipe system 22, and a third pipe system 54, which are fitted with controllable pumps and valves.

The working liquid is preferably water, as a MVR heating system using water as working liquid is easy to install and use. However, in some situations it might be beneficial to use a working liquid comprising water provided with additives, e.g. in order to prevent the working liquid from freezing, or to prevent bacterial growth. In order to prevent the liquid from freezing, glycol may be added, e.g. in a proportion up to 20%. The used working liquid should have similar characteristics like water with regard to e.g. boiling point temperature.

The MVR heating system also comprises a working liquid heating member 32. During a start-up procedure, this heating member is configured to heat the working liquid to a predetermined temperature before the compressor unit 24 begins operation. The working liquid heating member 32 may e.g. be an electrically operated heating device that generates heat by leading current through a metal thread, arranged in the container, that provides resistive heating to the working liquid. Other heating technologies may be applied, e.g. microwave heating, inductive heating, and infrared heating.

A compressor unit 24 is provided and is configured to compress vapour received from the container and to generate a high-pressure vapour flow 28. This compressed vapour is expelled into the container, e.g. into the lower part of the container 10, through a vapour input member 30, where it heats the working liquid.

The MVR heating system 2 comprises a control unit 34. The control unit has the necessary processing, storage, and communication capacities required to perform its intended tasks. The control unit is responsible for managing the various components of the system, including the working liquid pumps, valves, the heating member, and the compressor unit. It ensures that the system performs the required steps for working liquid heating and vapour recompression, such as filling the container to a predetermined level, heating the working liquid, and starting the compressor when the working liquid reaches the desired temperature.

In figure 1, the position of the at least one working liquid inlet 8 is indicated to be in the upper part 18 of the container 4. However, the at least one working liquid inlet 8 may be positioned also in the lower part 10. Furthermore, the inflow of working liquid 18 may be either in the part of the container 4 containing vapour 7, or in the part of the container 4 containing working liquid 6. Thus, the at least one working liquid inlet 8 may be positioned both above and/or below the working liquid surface 60.

In figure 1, the position of the vapour input member 30, providing the high-pressure vapour flow 28 into the container 4 is indicated to be below the working liquid surface 60.

However, the vapour input member 30 may also be positioned above the working liquid surface 60.

The control unit 34 is configured to generate control signals 36 to control the system to perform a heating operation, wherein the heating operation comprises:
- filling the container 4 with low temperature working liquid via the at least one working liquid inlet 8 to a predetermined level of the container 4;
- heating, during the start-up procedure, by the working liquid heating member 32, the working liquid 6 in the container 4 until the working liquid temperature reaches said predetermined temperature;
- starting, when the working liquid has reached the predetermined working liquid temperature, and running the compressor unit 24 resulting in that the pressure within the container 4 will decrease which in turn resulting in that the pre-heated working liquid starts to boil and produces vapour;
- generating, by said compressor unit 24, said high pressure vapour flow 28;
- expelling said high pressure vapour flow 28 in said container 4, and
- controlling the valves/pumps of the second pipe system 22 and/or the third pipe system 54 to supply high temperature working liquid and/or vapour to external consumers, e.g. for heating purposes.

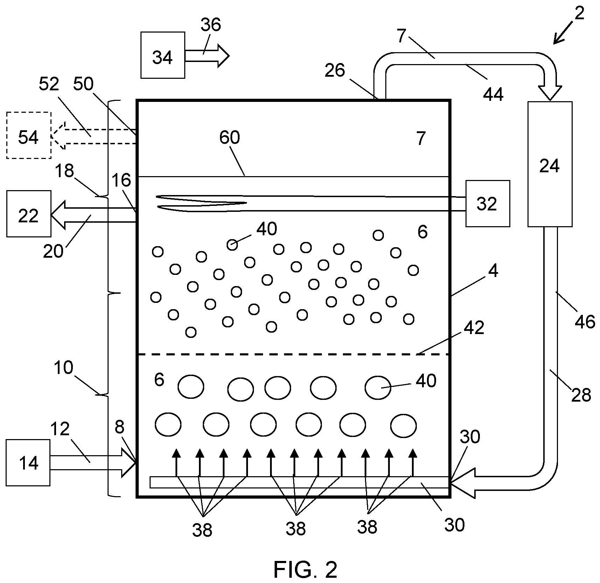

With references to the schematic illustration shown in figure 2, the MVR heating system according to embodiments of the present invention will now be described in detail.

The MVR heating system 2 comprises the closed container 4 designed to contain working liquid 6 and vapour 7, and has an upper part 18 and a lower part 10. During the operation of the system, the upper part is positioned above the lower part to allow the inflow and outflow of working liquid. In the figure, the upper and lower parts have essentially equal sizes, however, other proportions between these parts are possible, as long as the functionality described herein is fulfilled.

The container is provided with at least one working liquid inlet 8 located in the lower part 10; the working liquid inlet 8 is connected to a first pipe system 14 provided with controllable pumps and valves for the inflow of low-temperature working liquid 12. In figure 2, one working liquid inlet 8 is shown. In other implementations, two or three, or any number of, working liquid inlets may be applied.

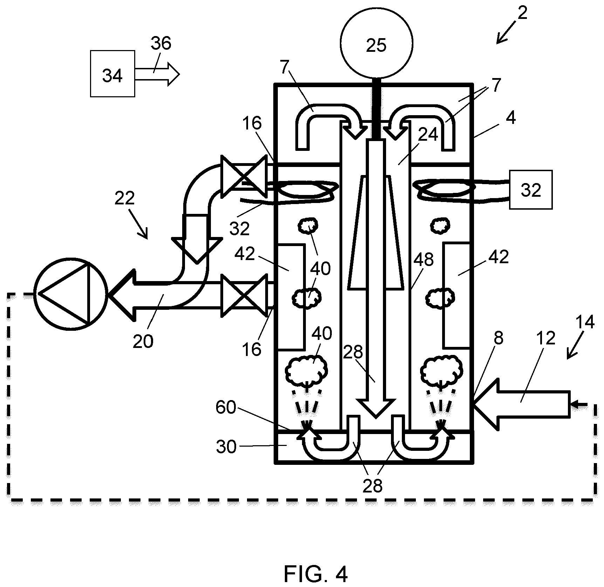

The container is also provided with at least one working liquid outlet 16 located in the upper part 18; the working liquid outlet 16 is connected to a second pipe system 22 equipped with controllable pumps and valves to facilitate the outflow 20 of high-temperature working liquid. In figure 2, one working liquid outlet 16 is shown. In other implementations, two or three, or any number of, working liquid outlets may be applied, see figure 4, where an embodiment of the MVR heating system is shown provided with two working liquid outlets 16. This may be advantageous as two-outflows of high-temperature working liquid having different temperatures may be obtained if the working liquid outlets are arranged at different heights.

In one embodiment, at least one vapour outlet 50 is provided in the upper part of the container. The vapour outlet may be provided as the only outlet or in combination with one or many working liquid outlets. The vapour outlet is schematically illustrated in figure 2, but is equally applicable in the other embodiments described herein. The vapour outlet is configured to expel a vapour flow for external use 52 via a third pipe system 54. The vapour for external use may be applied in all various applications as described in relation to the use of the high temperature working liquid flow 20.

The MVR heating system 2 further comprises the compressor unit 24 that is structured to receive vapour 7 from the upper part 18 of the container via the vapour output member 26. The compressor is configured to increase the vapour pressure, and to generate a high-pressure vapour flow 28 that is directed into the lower part of the container through a vapour input member 30. The compressor unit may e.g. be an axial compressor, with input and output along its longitudinal axis, or a radial compressor, where its output is perpendicular to its input.

The lower part 10 of the container is provided with at least one vapour input member 30, which expels the high-pressure vapour flow 28 into the colder working liquid supplied to the container via the working liquid inlet 8. In some embodiments, the vapour input member is provided with a plurality of nozzles 38 that expel vapour bubbles 40 into the working liquid. In the figure, the input vapour is indicated by arrows. As these bubbles rise, they condense, transferring their latent heat to the surrounding working liquid.

The MVR heating system also comprises the working liquid heating member 32 located in the upper part 18 of the container. During a start-up procedure, this heating member is configured to heat the working liquid to a predetermined temperature before the compressor unit 24 begins operation. The working liquid heating member 32 may e.g. be an electrically operated heating device that generates heat by leading current through a metal thread, arranged in the upper part of the container, that provides resistive heating to the working liquid.

As mentioned above, the MVR heating system 2 comprises a control unit 34.

More particularly, and with regard to the embodiments described in relation to figure 2, the control unit 34 is configured to generate control signals 36 to control the system to perform a heating operation, wherein the heating operation comprises:
A - filling the container 4 with low temperature working liquid via the at least one working liquid inlet 8 to a predetermined level in the upper part 18 of the container 4. The predetermined level is determined such that a part of the upper part is not filled with working liquid in order to provide space for the vapour 7. This part may e.g. be less than half of the volume of the upper part, e.g. approximately in the range of 10-25% of the total volume of the container. The predetermined level may be determined in various ways, e.g. a level sensor may be arranged at the container intended to determine the working liquid level.
B - heating, during the start-up procedure, by the working liquid heating member 32, the working liquid 6 in the upper part 18 of the container 4 until the working liquid temperature reaches the predetermined temperature. The predetermined temperature is a temperature required to vaporize the working liquid in the upper part, i.e. to make it boil, and is preferably higher than 90°C if the working liquid is water. This procedural step is also applicable to other embodiments described herein.
C - starting, when the working liquid has reached the predetermined working liquid temperature, and running the compressor unit 24 resulting in that the pressure in the upper part 18 of the container 4 will decrease which in turn resulting in that the pre-heated working liquid starts to boil and produces vapour. At least one temperature sensor is arranged configured to measure the working liquid temperature within the container, preferably at different levels of the container.
D - generating, by said compressor unit 24, said high pressure vapour flow 28.
   Thus, the compressor unit will provide a pressure increase of the input vapour flow, in order to generate the high pressure flow. Preferably, the pressure increase is approximately twice as high as the pressure of the input vapour, but may deviate significantly in order to harmonize with the hydrostatic pressure occurring at the depth of the container, where the high pressure vapour is injected into the container. This procedural step is also applicable to other embodiments described herein.
E - expelling the high pressure vapour flow 28 into the low temperature working liquid in said container 4 via the at least one vapour input member 30.
F - controlling said valves/pumps of said second pipe system 22, and/or said valves of the third pipe system 54, connected to the at least one high temperature working liquid outlet 16, and/or the at least one vapour outlet 50, respectively, to supply high temperature working liquid/vapour to external consumers, e.g. for heating purposes. By the expression external consumers is meant any external user that directly or indirectly uses the thermal heat generated by the system. As an example, which is schematically indicated in figure 4 but applicable also to the systems shown in figures 1-3, the first pipe system 22 are connected to the second pipe system 14 thereby forming a closed loop where the high temperature working liquid after having provided heat to the external user is returned to the container via the second pipe system 14. This is also applicable if a vapour outlet 50 is provided.

According to an embodiment, at least one vapour bubble braking member 42, such as a mesh, is arranged inside the container to divide larger vapour bubbles into smaller ones, increasing their relative surface area and slowing their ascent. This enhances the condensation process and maximizes heat transfer efficiency.

The bubble braking member is technically any type of flow restrictor that arrests ascending bubbles and slow their speed down by diverting their flow path and/or breaking them up into smaller bubbles with larger surface area, greater condensation probability, lower buoyancy and thereby slower ascension velocity.

Labyrinths, steel wool, meshes, strainers, horizontal traps, mechanical stirrers, ultrasound agitators etc. are all examples of typical braking members that slow down bubble ascension speed by physical obstruction of the ascension pathway.

In one variation the bubble braking member is a mesh having numerous openings, each having an area of approximately 1-3 mm². In other variations, a sheath is arranged having numerous openings, each having an area of approximately 1-3 mm².

According to an embodiment, the container is designed to withstand high temperatures (at least 150°C) and pressures (at least 1.5 bar), ensuring reliable operation under demanding conditions.

The compressor unit 24 can be arranged either externally, connected to the container via vapour pipes 44, 46, which is illustrated in the embodiments shown in figures 1, 2, and 3, or internally within a compressor unit enclosure arranged within the container, which is illustrated in figure 4.

More particularly, according to the embodiments illustrated in figures 1-3, the compressor unit 24 is arranged outside of said container 4, and connected to the vapour output member 26 at the container 4 via a vapour pipe 44 and to the lower part 10 of the container 4 via a high pressure vapour pipe 46 to the at least one vapour input member 30.

According to another embodiment, illustrated in figure 4, the compressor unit 24 is instead arranged within the container 4, in a compressor unit enclosure 48. The compressor unit enclosure 48 is made from any material suitable to withstand the temperature and pressure within the container. An advantage of this embodiment is that no externally mounted compressor unit is required resulting in a compact MVR heating system that may be easy to handle. A motor 25 is provided, configured to operate the compressor unit 24. The motor 25 may be mounted within the compressor unit enclosure, or, as in figure 4, mounted outside of the container.

According to a further embodiment, the container is designed with an essentially circular cylindrical shape, with its symmetry axis vertically oriented during operation to optimize the system's heating and condensation processes.

However, many other geometrical shapes are possible, e.g. rectangular shapes providing MVR heating systems having flat and planar extensions.

The MVR heating system can be made in different sizes depending on the intended use, e.g. smaller movable systems having extensions less than 1 meter, to larger stationary systems haver larger extensions.

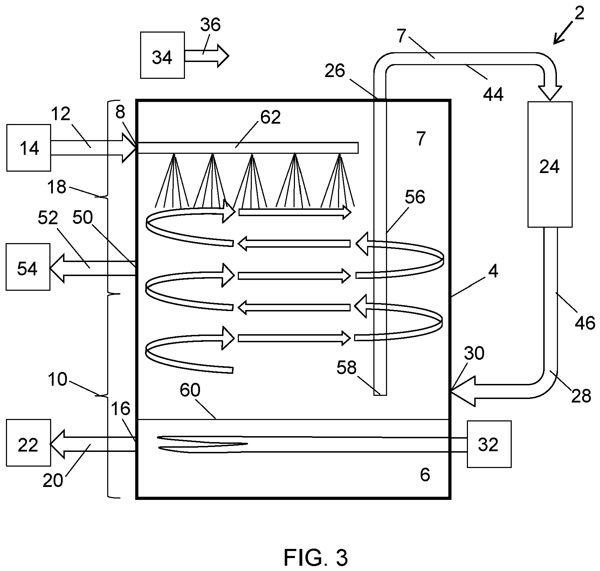

According to another embodiment, illustrated in figure 3, the at least one working liquid inlet 8 is arranged at the upper part 10 of the container 4. In one advantageous variation, a working liquid injection member 62 is arranged within the container. The working liquid injection member 62 is provided with a number of nozzles configured to supply the working liquid received via the working liquid inlet 8 into the upper part of the container as small droplets sprayed into the container resulting in a working liquid fog, which is indicated by a number of lines directed downwards. By providing the injected working liquid as small droplets a larger surface area of the working liquid is achieved resulting in an improved evaporation of the working liquid droplets when colliding with the high pressure vapour expelled in the lower part of the container.

According to this embodiment, the control unit 34 is configured to control the working liquid inflow through the working liquid inlet member 8 such that said at least one vapour input member 30 is positioned above the working liquid surface 60.

As mentioned above, and according to a further embodiment, the container is designed with an essentially circular cylindrical shape. In one variation, illustrated in figure 3, the high pressure vapour is expelled along the inner surface of the container and preferably directed upwards resulting in a vapour flow having an spiral-shaped propagation direction upwards, which is schematically illustrated in figure 3. This will increase the distance of the high temperature vapour flow within the container, which will improve the evaporation of the low temperature working liquid. The vapour flow will collide with the small droplets, resulting in a high temperature difference between the temperatures of working liquid droplets and of the high pressure vapour, which is advantageous.

In a further embodiment, which is based upon the embodiment shown in figure 3, an internal vapour pipe 56 is arranged in the container and connected to the vapour output member 26. The internal vapour pipe 56 is provided with a pipe opening 58 positioned in the lower part 10 of the container 4 and above the working liquid surface 60 in order to provide a vapour inflow to the compressor unit 24. The control unit 34 is configured to control the working liquid inflow through the working liquid inlet member 8, such that the pipe opening is positioned above the working liquid surface 60. The rationale behind arranging the internal vapour pipe is that it would be possible to chose the position within the container where vapour is sucked into the compressor unit not to interfere with the expelled high pressure vapour flow.

The present invention is not limited to the above-described preferred embodiments. Various alternatives, and modifications may be used. Therefore, the above embodiments should not be taken as limiting the scope of the invention, which is defined by the appending claims.

### List of references

- 2: MVR heating system
- 4: Container
- 6: Working liquid
- 7: Evaporated and/or condensed working liquid
- 8: Working liquid inlet
- 10: Lower part of the container
- 12: Inflow of low temperature working liquid
- 14: First pipe system
- 16: Working liquid outlet
- 18: Upper part of the container
- 20: Outflow of high temperature working liquid
- 22: Second pipe system
- 24: Compressor unit
- 25: Motor for compressor unit
- 26: Vapour output member
- 28: High pressure vapour flow
- 30: Vapour input member
- 32: Working liquid heating member
- 34: Control unit
- 36: Control signals
- 38: Nozzles of vapour input member
- 40: Vapour bubble
- 42: Vapour bubble breaking member
- 44: Vapour pipe
- 46: High pressure vapour pipe
- 48: Compressor unit enclosure
- 50: Vapour outlet
- 52: Vapour flow for external use
- 54: Third pipe system
- 56: Internal vapour pipe to compressor
- 58: Vapour pipe opening
- 60: Working liquid surface
- 62: Working liquid injection member

## Claims

1. A mechanical vapour recompression (MVR) heating system (2) comprising a closed container (4) comprising a lower part (10) and an upper part (18), and intended to contain working liquid (6) and vapour (7), the container (4) is provided with at least one working liquid inlet (8) arranged to receive an inflow (12) of low temperature working liquid into the container (4) and being connectable to a first pipe system (14) provided with controllable pumps and valves, the container (4) is further provided with at least one working liquid outlet (16) arranged to provide an outflow (20) of high temperature working liquid out from the container (4), and/or at least one vapour outlet (50) arranged to provide an outflow (52) of high temperature vapour out from the container (4), wherein said at least one working liquid outlet (16) being connectable to a second pipe system (22) provided with controllable pumps and valves, and/or said at least one vapour outlet (50) being connectable to a third pipe system (54) provided with controllable pumps and valves, **characterized in that** the MVR heating system (2) further comprises a compressor unit (24) arranged to receive vapour (7) from the container (4) via a vapour output member (26), and to generate a high pressure vapour flow (28), wherein the container (4) is provided with at least one vapour input member (30) configured to receive and expel said high pressure vapour flow (28) into said container (4), the container (4) is provided with a working liquid heating member (32) arranged in the container (4) and intended to heat working liquid (6) to a predetermined temperature during a start-up procedure, the MVR system (2) further comprises a control unit (34) configured to generate control signals (36) to control the system to perform a heating operation, wherein the heating operation comprises:
- filling the container (4) with low temperature working liquid via said at least one working liquid inlet (8) to a predetermined level of the container (4);
- heating, during the start-up procedure, by the working liquid heating member (32), the working liquid (6) in the container (4) until the working liquid temperature reaches said predetermined temperature;
- starting, when said working liquid has reached said predetermined working liquid temperature, and running the compressor unit (24) resulting **in that** the pressure within the container (4) will decrease which in turn resulting **in that** the pre-heated working liquid starts to boil and produces vapour;
- generating, by said compressor unit (24), said high pressure vapour flow (28);
- expelling said high pressure vapour flow (28) in said container (4), and
- controlling said valves/pumps of said second pipe system (22) and/or said third pipe system (54) to supply high temperature working liquid and/or vapour to external consumers, e.g. for heating purposes.

2. The MVR heating system (2) according to claim 1, wherein said at least one working liquid inlet (8) is arranged at a lower part (10) of the container (4), and wherein said at least one vapour input member (30) is arranged in the lower part (10) of the container (4) and is configured to receive and expel said high pressure vapour flow (28) into the low temperature working liquid in the lower part (10) of said container (4).

3. The MVR heating system (2) according to claim 2, wherein said at least one vapour input member (30) is provided with a plurality of nozzles (38) to expel the high pressure vapour into the low temperature working liquid, and wherein the temperature difference between the vapour and the low temperature working liquid will result in that the vapour bubbles (40) will transfer their evaporation heat to the surrounding colder working liquid, thereby condensing and loosing volume as they rise through the working liquid inside the container (4).

4. The MVR system (2) according to claim 2 or 3, comprising at least one vapour bubble braking member (42), e.g. a vapour bubble braking mesh, structured to be arranged within said container, and structured to divide vapour bubbles (40) into smaller bubbles, in order to maximize their relative surface areas, having lower ascension velocity, and thereby slowing down the speed upwards and increasing probability for condensation.

5. The MVR system (2) according to claim 1, wherein said at least one working liquid inlet (8) is arranged at an upper part (10) of the container (4), and wherein said control unit (34) is configured to control the working liquid inflow through said working liquid inlet member (8) such that said at least one vapour input member (30) is positioned above said working liquid surface (60).

6. The MVR system (2) according to claim 5, wherein an internal vapour pipe (56) is arranged in said container and connected to the vapour output member (26), and is provided with a pipe opening (58) positioned in the lower part (10) of the container (4) and above the working liquid surface (60) in order to provide a vapour inflow to the compressor unit (24), and wherein said control unit (34) is configured to control the working liquid inflow through said working liquid inlet member (8), such that said pipe opening is positioned above said working liquid level (60).

7. The MVR system (2) according to any of claims 1-6, wherein said compressor unit (24) is an axial compressor, provided with its input and output along its longitudinal axis.

8. The MVR system (2) according to any of claims 1-7, wherein said container (24) is capable of withstanding temperatures of at least 150 °C and pressures of at least 1.5 bar.

9. The MVR system (2) according to any of claims 1-8, wherein said compressor unit (24) is arranged outside of said container (4), and connected to the vapour output member (26) at the container (4) via a vapour pipe (44) and to the lower part (10) of the container (4) via a high pressure vapour pipe (46) to said at least one vapour input member (30).

10. The MVR system (2) according to any of claims 1-8, wherein said compressor unit (24) is arranged within said container (4), in a compressor unit enclosure (48).

11. The MVR system (2) according to any of claims 1-10, wherein said container (4) has an essentially circular cylindrical shape with a symmetry axis that is essentially vertically oriented during operation of the MVR system (2).

12. The MVR system (2) according to any of claims 1-11, wherein said working liquid is water.
